# EUROPEAN PATENT APPLICATION

(11) **EP 2 966 241 A1**
(43) Date of publication of application: **13.01.2016**
(21) Application number: 15002027.9
(22) Date of filing: 06.07.2015
(51) Int. Cl.: E04G 7/14, E04G 7/16, F16B 7/00

(54) **IMPROVED CONNECTION JOINT, IN PARTICULAR FOR ASSEMBLING SCAFFOLDS**

(30) Priority: 11.07.2014 IT TO20140556
(71) Applicant: Edilimpianti di Deplano, Vittorio, 10126 Torino (IT)
(72) Inventor: Deplano, Vittorio, I-10126 Torino (IT)
(74) Representative: Garavelli, Paolo

(57) **Abstract**

A connection joint (1) is described, in particular for assembling scaffolds (10), comprising: at least one first jaw (3a) adapted to tighten at least one portion of a first tube (5a) having a first longitudinal axis (Y-Y); at least one second jaw (3b) adapted to tighten at least one portion of a second tube (5b) having a second longitudinal axis (X-X); and at least one third jaw (3c) adapted to tighten at least one portion of a third tube (5c) having a third longitudinal axis (Z-Z), the third longitudinal axis (Z-Z) and the second longitudinal axis (X-X) locating a plane (P) orthogonal to the first longitudinal axis (Y-Y) and being belonging and coplanar to the plane (P) orthogonal to the first longitudinal axis (Y-Y).

## Description

The present invention refers to an improved connection joint, in particular for assembling scaffolds.

As known, a scaffold is a temporary or non-temporary reticular structure, usually made of steel, equipped with decks, typically made of wooden or metallic tables, and is for example assembled for constructing or restructuring buildings, or creating stages, steps or billboards.

One of the most widespread scaffold structures is the one commonly known as "Innocent" tube scaffold, composed of a plurality of steel tubes to be assembled through the use of a suitable number of connection joints with double jaw. Generally, a connection joint is composed of a pair of jaws, mutually arranged in order to tighten two distinct tubes, so that their related longitudinal axes are arranged in substantially orthogonal positions: from this it follows that, if it is necessary to take care of assembling a node composed of three tubes, usually two in horizontal positions and one in a vertical position (for example operating as riser), it is necessary to use two of the above described joints: this creates the problem that, given the joint shaping, the horizontal tubes will necessarily be placed at different heights, with serious impairments to the compliance with safety standards in force, above all when the horizontal tubes have to make the scaffold parapet.

In fact, using the above described connection joints, if one of the horizontal tubes is placed at the required height, the other horizontal tube will necessarily have to be placed at a higher or lower height than the required height, consequently obtaining a non-compliant parapet.

Moreover, known joints allow making scaffolds to adhere to surfaces, such as building facades, substantially linear in plan view and mutually arranged at right angles, while they are badly suited for surfaces which, in plan view, are nonlinear, circular or polygonal.

In order to solve the above inconveniences, the art has proposed some solutions of connection joints for scaffolds like those disclosed, in particular, in GB1137208, GB2382618, EP0131370, GB905493, GB1249821, DE2753067.

None of known connection joints, however, allows simultaneously mutually assembling the ends of three different tubes in such a way that:
- at least two different tubes are assembled mutually coplanar; and/or
- the three different tubes are assembled with their respective longitudinal axes which are mutually orthogonal; and/or
- the angle subtended between the longitudinal axes of at least two different tubes is adjustable.

Therefore, object of the present invention is solving the above prior art problems, by providing an improved connection joint, in particular for assembling scaffolds, which allows simultaneously mutually assembling three different tubes, so that the three different tubes can also be arranged with their respective longitudinal axes which are mutually orthogonal and at least due of the different tubes are assembled mutually coplanar.

Another object of the present invention is providing an improved connection joint, in particular for assembling scaffolds, which allows simultaneously assembling three different tubes so that the angle subtended between the longitudinal axes of at least two of the different tubes is adjustable.

The above and other objects and advantages of the invention, as will appear from the following description, are obtained with an improved connection joint as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) could be made to what is described, without departing from the scope of the invention as appears from the enclosed claims.

The present invention will be better described by some preferred embodiments thereof, provided as a non-limiting example, with reference to the enclosed drawings, in which:
- Figure 1 shows a diagram representing the mutual geometric positions assumed by the components of the connection joint according to the present invention;
- Figure 2 shows a side perspective view of a preferred embodiment of the connection joint according to the present invention;
- Figures 3 and 4 show side perspective views of a variation of the connection joint according to the present invention in two operating positions;
- Figures 5 and 6 show top perspective views of a scaffold assembled through the connection joint in the two operating positions respectively of Figures 3 and 4; and
- Figure 7 show a top perspective view of a possible embodiment of a scaffold assembled through a plurality of connection joints of Figures 3 and 4.

With reference to the Figures, it is possible to note that the connection joint 1 according to the present invention, in particular for assembling scaffolds, comprises:
- at least one first jaw 3a adapted to tighten at least one portion of a first tube 5a having a first longitudinal axis Y-Y;
- at least one second jaw 3b adapted to tighten at least one portion of a second tube 5b having a second longitudinal axis X-X: preferably, the second jaw 3b is stiffly connected to the first jaw 3a so that the second longitudinal axis X-X is, in the operating assembling position of the joint 1, substantially orthogonal to the first longitudinal axis Y-Y; and
- at least one third jaw 3c, adapted to tighten at least one portion of a third tube 5c having a third longitudinal axis Z-Z, the third longitudinal axis Z-Z and the second longitudinal axis X-X locating, in the operating assembling position of the joint 1, a plane P orthogonal to the first longitudinal axis Y-Y and being, consequently, belonging and coplanar to the plane P orthogonal to the first longitudinal axis Y-Y.

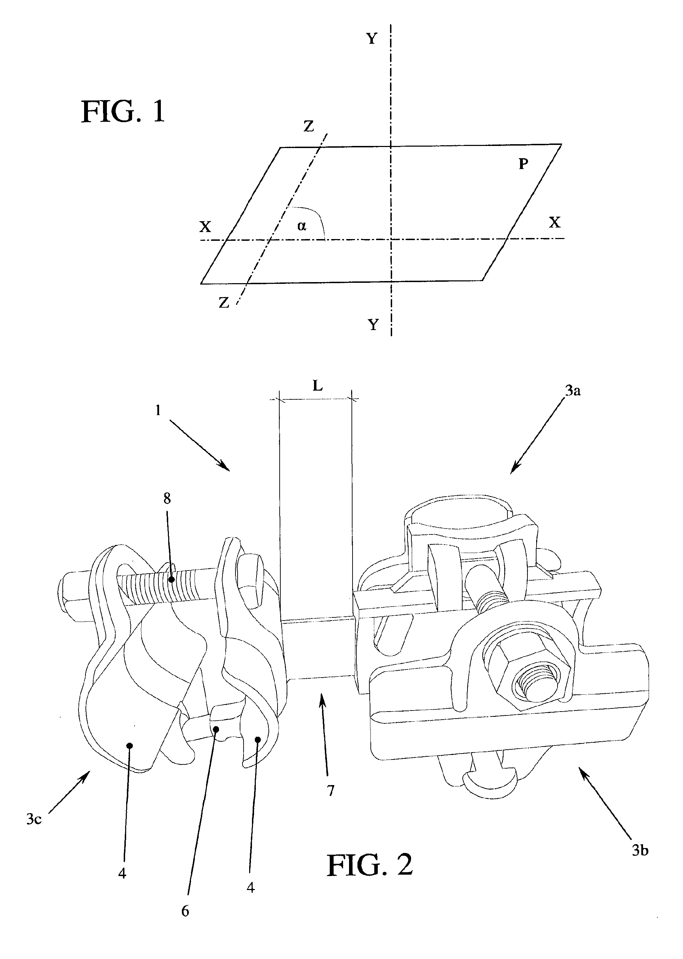

Obviously, any type of known jaw suitable for the herein described application can be used for obtaining the jaws 3a, 3b, 3c, without thereby departing from the scope of the present invention. For example, as it is possible to note in Figure 2, each of the jaws 3a, 3b, 3c of the joint 1 according to the present invention, like the one shown in the Figures, can be composed, in a substantially known way, of two, contrasted and joint half-shells 4, joined, on one side, by at least one articulation pin 6 and, on the opposite side, by at least one bolt 8 for tightening the jaw 3a, 3b, 3c around the respective portion of tube 5a, 5b, 5c.

Preferably, the first jaw 3a or the second jaw 3a is connected to the third jaw 3c by interposing at least one connecting element 7.

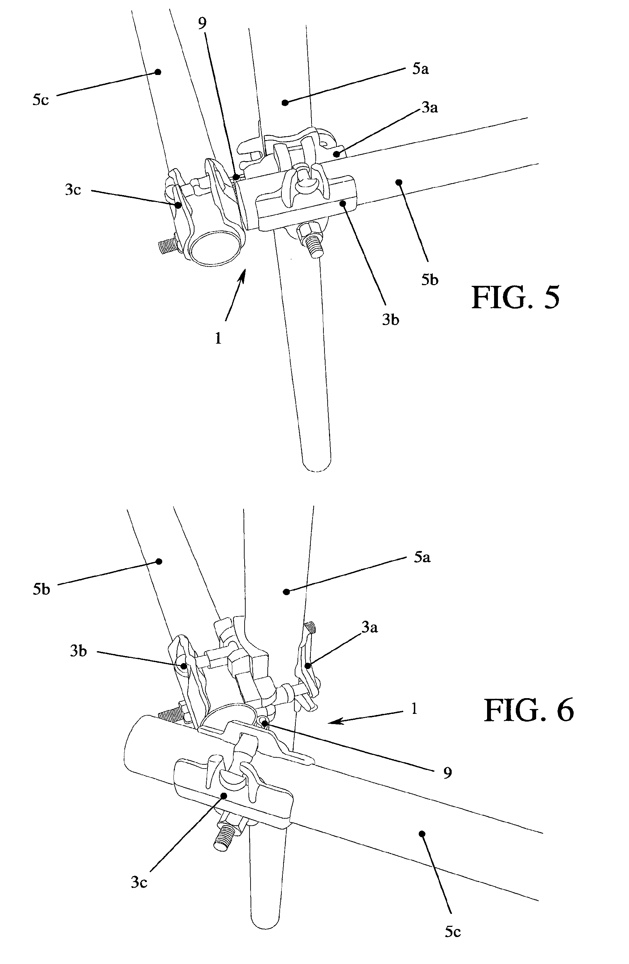

In a first preferred embodiment of the joint 1 according to the present invention, like the one, for example, show in Figures 2 and 5, the connecting element 7 is made of a substantially stiff material and its shaping allows setting the angle α included between the third longitudinal axis Z-Z and the second longitudinal axis X-X to a desired value: for example, as required in the most common applications for assembling scaffolds with right angles (like the one partially shown in Figure 1), the connecting element 7 can be shaped so that α ≈ 90°.

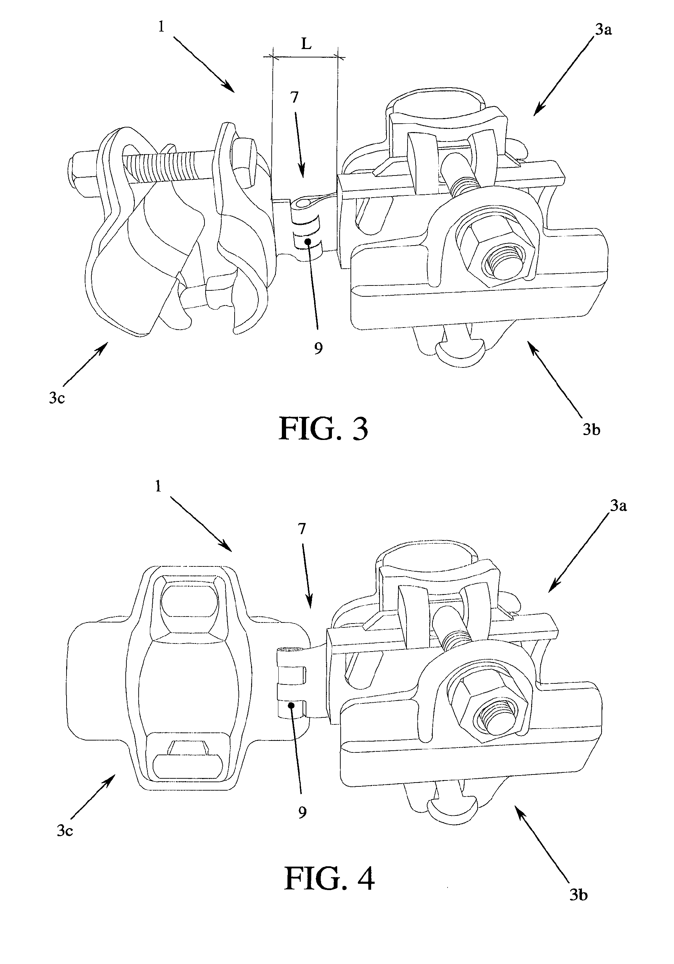

Advantageously, in a second preferred embodiment of the joint 1 according to the present invention, like the one shown, for example, in Figures 3 to 7, the connecting element 7 comprises at least one regulating means 9 of the angle α included between the third longitudinal axis Z-Z and the second longitudinal axis X-X, the regulating means 9 being adapted to allow changing the angle α till the desired value is reached. For example, the connecting element 7 can be composed of at least one hinge (as show in particular, for example, in Figures 3 and 4) or flexible tongue, or any other means having similar functionalities.

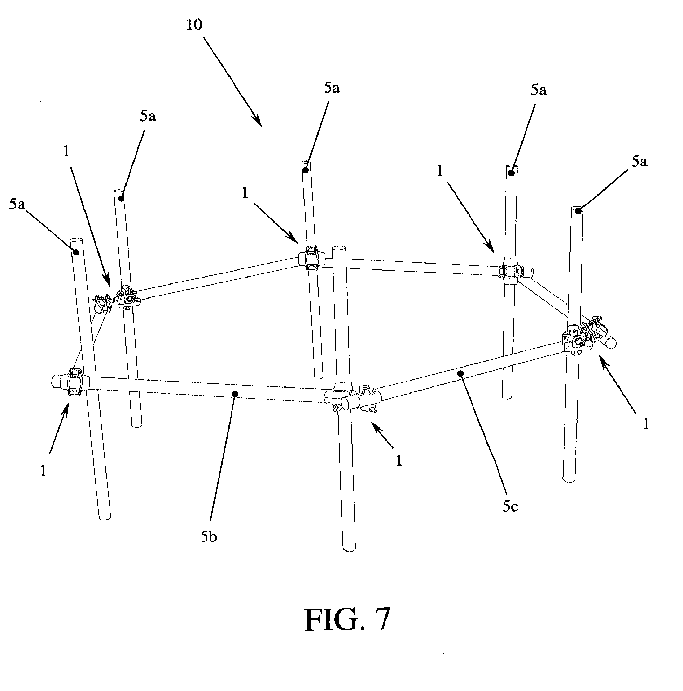

Advantageously, therefore, the regulating means 9 allow using the joint 1 according to the present invention for assembling scaffolds having any polygonal shape in plan view (such as, for example, the scaffold 10 of Figure 7 shaped as an hexagonal plan) by simply changing, according to needs, the angle α included between the third longitudinal axis Z-Z and the second longitudinal axis X-X, in order to be able, though complying with safety standards in force, easily and simply assembling the scaffolds servicing buildings with circular, polygonal or irregularly shaped plan views.

According to a further advantageous feature of the joint 1 according to the present invention, the connecting element 7 has a length L greater than or equal to at least one length of the terminal part of the second tube 5b, which projects from the second jaw 3b towards the third jaw 3c, to allow the mutual positioning of the second jaw 3b and of the third jaw 3c, so that, removing the interference between the terminal part of the second tube 5b projecting from the second jaw 3b and the terminal part of the third tube 5c projecting from the third jaw 3c, the angle α included between the third longitudinal axis Z-Z and the second longitudinal axis X-X can also assume values which are equal to or greater than 90°, in order, for example, to allow the linear positioning of the second tube 5b and of the third tube 5c, namely with the second longitudinal axis X-X and the third longitudinal axis Z-Z substantially coinciding with and coplanar along the plane P.

The joint 1 according to the present invention, like the previously described one, therefore allows simultaneously obtaining the following advantages:
- at least the second tube 5b and the third tube 5c can be assembled mutually coplanar along the plane P: this also allows obtaining, through the joint 1 according to the present invention, protecting parapets of the scaffolds in which the horizontal tubes 5b and 5c composing the parapet itself are at the same height imposed by safety standards;
- the angle α included at least between the longitudinal axes X-X and Z-Z of at least two different tubes 5b, 5c can be adjustable;
- the three different tubes 5a, 5b, 5c can also be assembled with their respective longitudinal axes Y-Y, X-X, Z-Z which are mutually orthogonal;
- at least two different tubes 5b, 5c can also be positioned aligned so that their respective longitudinal axes X-X, Z-Z are coincident and coplanar to the plane P.

## Claims

1. Connection joint (1), in particular for assembling scaffolds (10), comprising:
- at least one first jaw (3a) adapted to tighten at least one portion of a first tube (5a) having a first longitudinal axis (Y-Y);
- at least one second jaw (3b) adapted to tighten at least one portion of a second tube (5b) having a second longitudinal axis (X-X); and
- at least one third jaw (3c) adapted to tighten at least one portion of a third tube (5c) having a third longitudinal axis (Z-Z), said third longitudinal axis (Z-Z) and said second longitudinal axis (X-X) locating a plane (P) orthogonal to said first longitudinal axis (Y-Y) and being belonging and coplanar to said plane (P) orthogonal to said first longitudinal axis (Y-Y), **characterized in that** said second jaw (3b) is stiffly connected to said first jaw (3a), without interposing connecting elements, so that said second longitudinal axis (X-X) is substantially orthogonal to said first longitudinal axis (Y-Y), and **in that** said first jaw (3a) or said second jaw (3a) is connected to said third jaw (3c) by interposing at least one connecting element (7).

2. Connection joint (1) according to claim 1, **characterized in that** each of said jaws (3a, 3b, 3c) is composed of two contrasted and joint half-shells (4), joined, on one side, by at least one articulation pin (6) and, on the opposite side, by at least one bolt (8) for tightening said jaw (3a, 3b, 3c) around a respective portion of tube (5a, 5b, 5c).

3. Connection joint (1) according to claim 1, **characterized in that** said connecting element (7) is made of a substantially stiff material, shaped for setting an angle α included between said third longitudinal axis (Z-Z) and said second longitudinal axis (X-X) to a desired value.

4. Connection joint (1) according to the previous claim, **characterized in that** said connecting element (7) is shapes so that α ≈ 90°.

5. Connection joint (1) according to claim 1, **characterized in that** said connecting element (7) comprises at least one regulating means (9) of an angle α included between said third longitudinal axis (Z-Z) and said second longitudinal axis (X-X), said regulating means (9) being adapted to allow changing said angle α till a desired value is reached.

6. Connection joint (1) according to the previous claim, **characterized in that** said connecting element (7) is composed of at least one hinge or flexible tongue.

7. Connection joint (1) according to claim 1, **characterized in that** said connecting element (7) has a length (L) which is greater than or equal to at least one length of a terminal part of said second tube (5b) projecting from said second jaw (3b) towards said third jaw (3c).
